# EUROPEAN PATENT APPLICATION

(11) **EP 4 760 217 A1**
(43) Date of publication of application: **17.06.2026**
(21) Application number: 25223235.0
(22) Date of filing: 15.12.2025
(51) Int. Cl.: G01G 19/00

(54) **MACHINE FOR AN OPTIMISED REMOVAL OF MATERIAL FROM PRODUCTS AND OPERATION METHOD**

(30) Priority: 16.12.2024 IT 202400028584
(71) Applicant: A.B.L. S.r.L., 41032 Cavezzo (Modena) (IT)
(72) Inventor: BASTONI, Andrea, 41037 Mirandola (MO) (IT); ASCARI, Luca, 41032 Cavezzo (MO) (IT); FABBRI, Matteo, 41032 Cavezzo (MO) (IT); CARAMAZZA, Salvatore, 41012 Capri (MO) (IT)
(74) Representative: Casadei, Giovanni

(57) **Abstract**

Method for monitoring the operation of a machine (10) for an optimised removal of material from products (P), comprising the steps of:
Acquiring first data (d1) corresponding to a measurement of the initial weight (wi) of a product (P) entering the machine (1);
Acquiring second data (d2) corresponding to a measurement of the final weight (wf) of the product (P) exiting the machine (1), following the removal of material from the product (P);
Carrying out an operation of comparing between the first data (d1) and the second data (d2) to obtain data (D) of the difference between the first data (d1) and the second data (d2);
Computer program comprising instructions which, when the
program is run by a computer comprising a control unit (4), ensure that the computer implements the steps of the method.

A machine (10) for the controlled removal of material from a product (P), comprising the control unit (4).

## Description

The present invention relates to the field of machines for removing material from products. For example, but not exclusively, the present invention relates to the field of machines for removing material from food-type products, preferably from fruit.

In particular, the present invention relates to systems for monitoring the operation of said machines for removing material.

An object of the present invention is a method for monitoring the operation of a machine for removing material from products.

A further object of the present invention is a computer program configured to perform said monitoring method.

Finally, an object of the present invention is a machine for the optimised removal of material from products, comprising a control unit configured to carry out the aforesaid monitoring method.

In the prior art, material removal machines operate by removing a part of material from one or more products in input to obtain a finished product having removed parts. The techniques used to perform said material removal can be of various types, such as milling, abrasion, cutting and other types of processing, surface and non-surface.

In order to evaluate the correct performance of the material removal operations, quality control interventions are carried out on a sample basis by one or more operators on batches exiting a material removal machine, controls that typically involve the visual inspection of the final product.

In the food sector, the monitoring of machines for the removal of material from a product can take place with the aforementioned visual inspection or by the acquisition of parameters of interest carried out on a sample basis on batches of products.

For example, according to a prior art method, the products belonging to a batch selected for quality control are collected by an operator on scales, weighed, then processed by the machine for removing material. Subsequently, the products are collected from the machine by the same or another operator and weighed again.

The weight of the batch, in input and output, read by an operator provides an estimate of the amount of material removed overall from the sample batch.

However, the estimate obtainable by said monitoring method is an estimate of the total batch and is approximate. In addition, if food products are considered, such as fruits and vegetables in general, having high variability by nature, the estimate is even more approximate and difficult to attribute to the action of the machine on the individual product .

Therefore, the evaluations regarding the correct operation of the machine that can be made on the basis of said estimate risk being hardly precise, leading, for example, to underestimate problems, faults or malfunctions of the machine.

Finally, the quality control operations are time-consuming and employ operators dedicated to carrying them out, in particular to collect the batch in input, weigh or control said batch, wait for the necessary material removal time of the machine, collect the batch again once processed and carry out the final weighing. Therefore, there are slowdowns in the production process, the more frequent the higher the incidence of quality controls.

In the prior art, in other words, the systems for monitoring the operation of material removal machines can be greatly improved from a point of view of the accuracy of the estimate, the accuracy of the evaluations carried out on the basis of the estimate and the efficiency of carrying out the monitoring.

Therefore, the technical task of the present invention is to provide a method for monitoring a machine for an optimised removal of material from products, a computer program and a machine comprising a control unit for the implementation of said method capable of overcoming the obvious limitations of the prior art.

In particular, the object of the present invention is to provide a method for monitoring a machine for an optimised removal of material from products, a computer program and a machine comprising a control unit for implementing said method in an accurate, effective, repeatable manner and with reduced burdens in terms of time and resources employed.

The technical task and the objects set forth are achieved by a monitoring method, a computer program and a machine for the optimised removal of material comprising the technical features set forth in one or more of the appended claims.

Further features and advantages of the present invention will become more apparent from the indicative and thus non-limiting description of a preferred but non-exclusive embodiment of a monitoring method, a computer program and a machine for removing material from products.

Such a description will be set forth herein below with reference to the accompanying drawings, provided for merely indicative and therefore non-limiting purposes, wherein:
- Figure 1 shows a schematic representation of a machine for the optimised removal of material according to the present invention.
- Figure 2 shows an operating diagram of a control unit comprised in the machine of Figure 1.
- Figure 3 shows an isometric view of a machine for an optimised removal of material according to the present invention, in an embodiment;
- Figure 4 shows a sectional side view of the machine of Figure 3;
- Figure 5 shows an isometric view of the machine of Figure 3, with some parts removed;

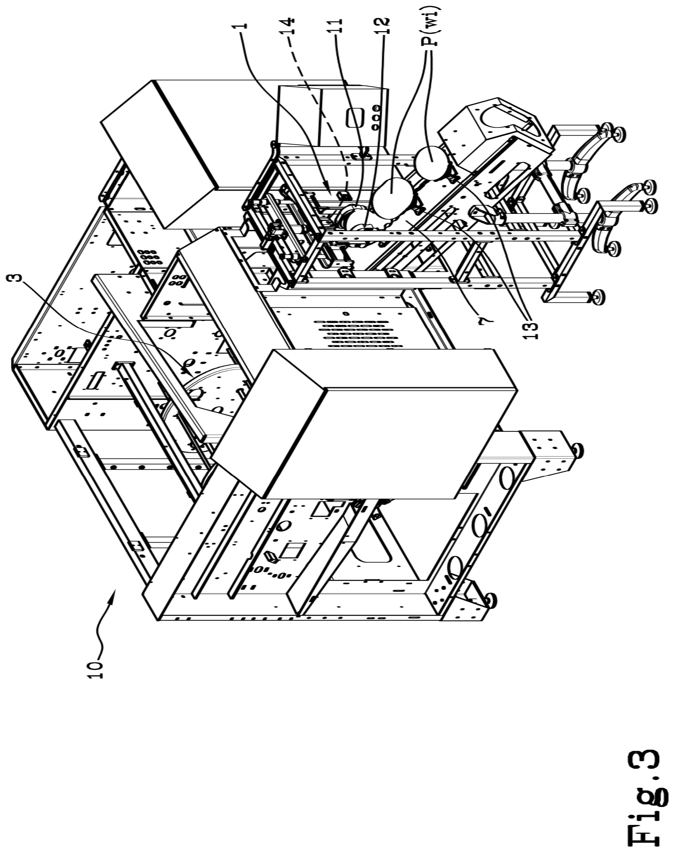

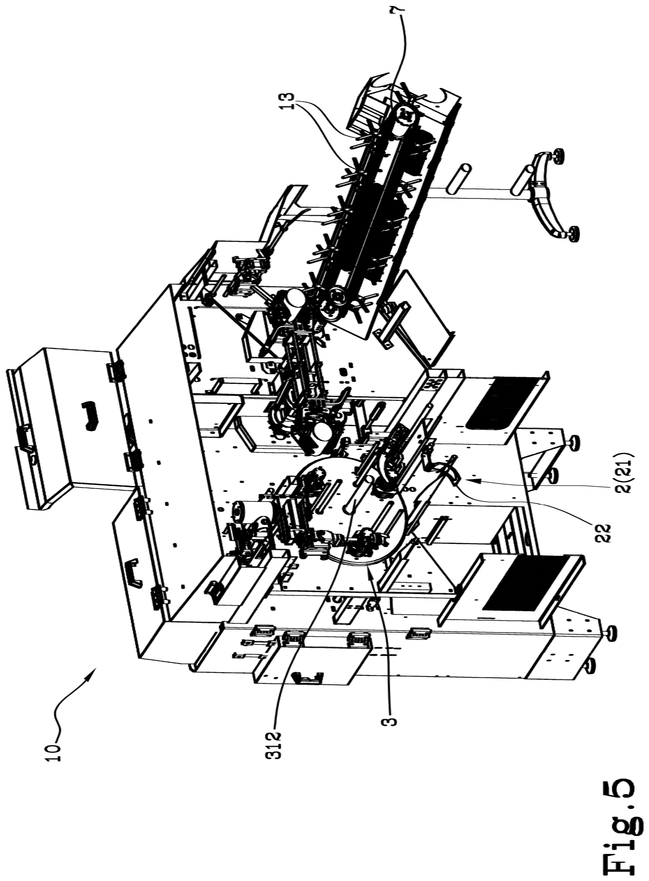

- Figure 5 shows an isometric view of the machine of Figure 3, with some parts removed;

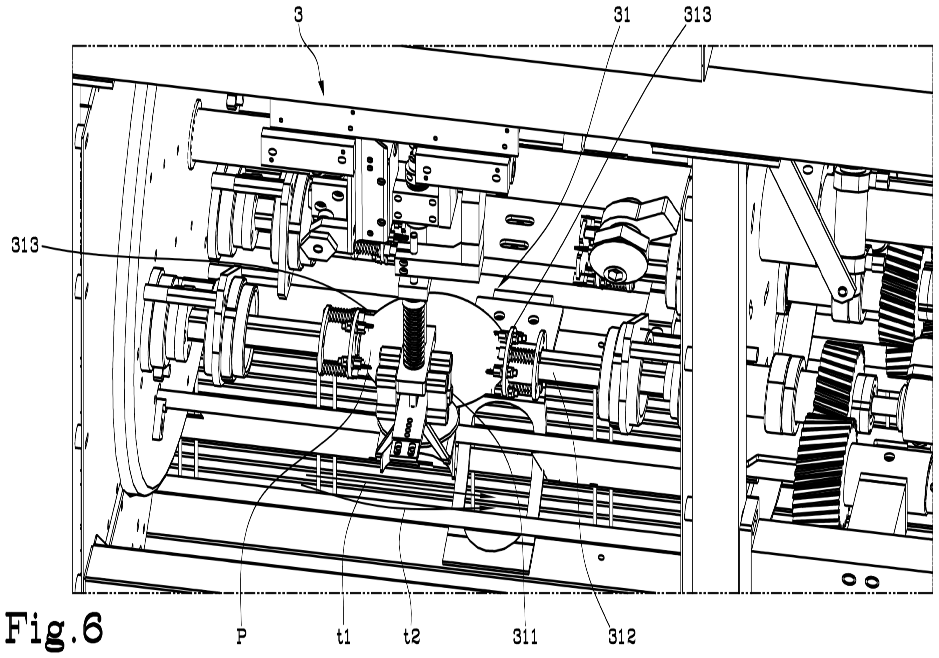

- Figure 6 shows an isometric view from above of a removal unit comprised in the machine according to the present invention, in a first operating step;

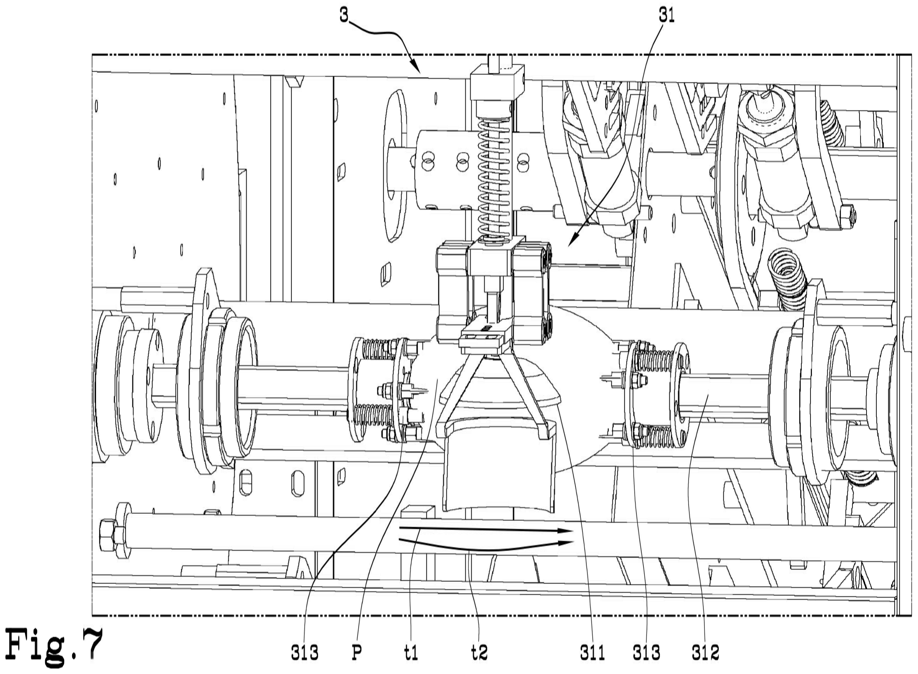

- Figure 7 shows a side view of the removal unit of Figure 6, in the first operating step;

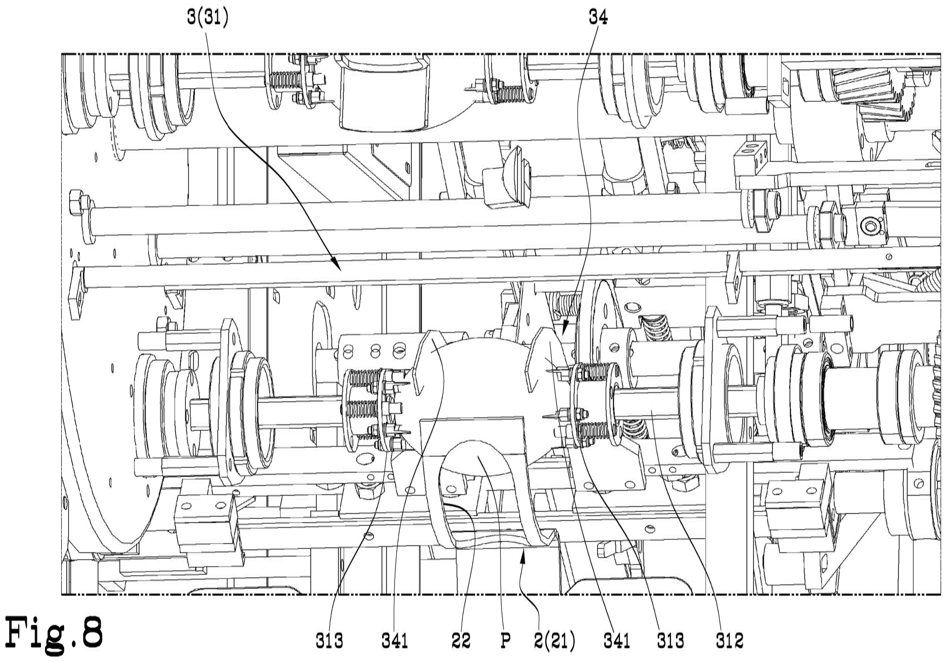

- Figure 8 shows a side view of the removal unit of Figure 6 in a second operating step;

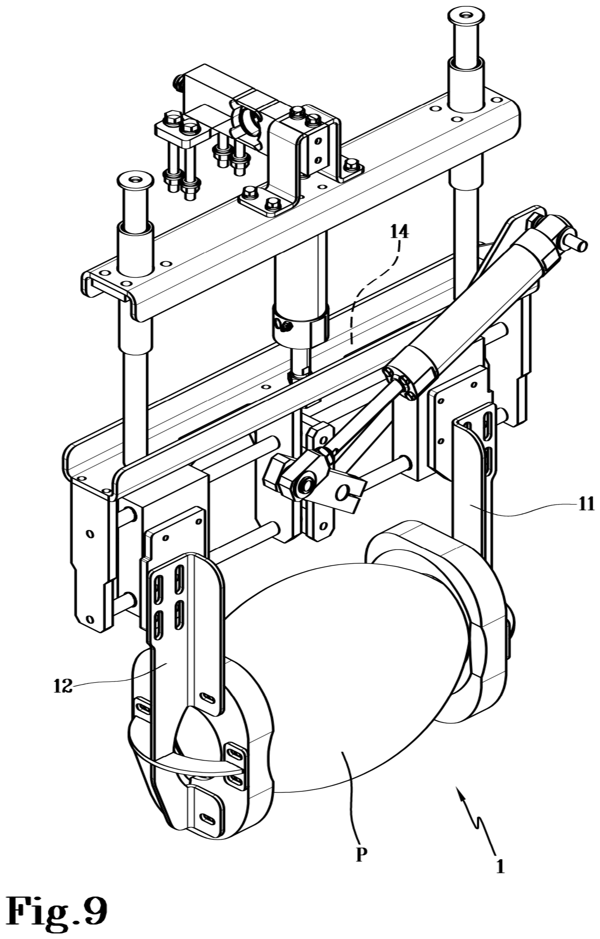

- Figure 9 shows an isometric view of a first weighing device comprised in the machine according to the present invention;

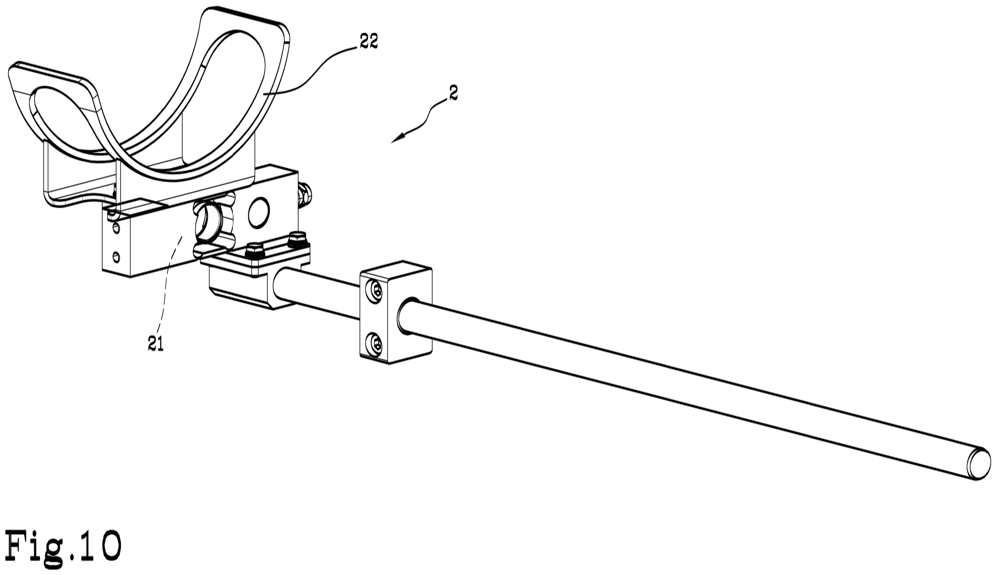

- Figure 10 shows an isometric view of a second weighing device comprised in the machine according to the present invention.

The reference number 10 indicates a machine for the optimised removal of material from products P.

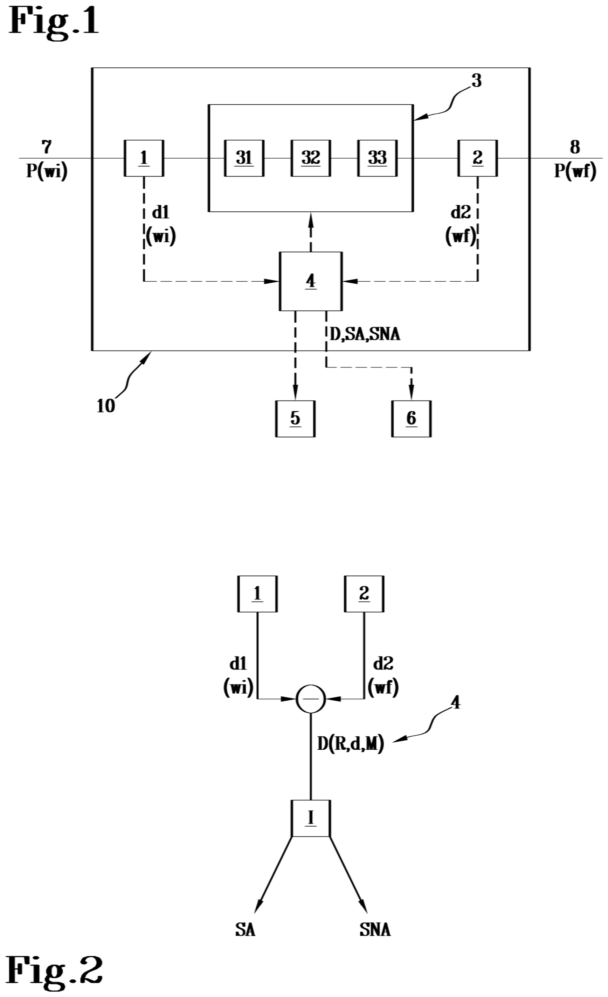

The first object of the present invention is the machine 10 for the optimised removal of material from products P (Fig. 1).

The term machine for the removal of material means a machine configured to remove an amount of material from a product P, for example, by cutting, scraping, milling, abrasion, scrap removal or through further techniques and means known in the art.

In input to the machine 10, each product P is characterised by an initial weight wi. The initial weight wi of the product P is determined either by the product P in its entirety or raw, or by the product P after having undergone previous processing in stations situated upstream of the machine 10, considering the transport direction 10.

In output from the machine 10, each product P is characterised by a final weight wf, less than the initial weight wi. In fact, the final weight wf depends on the initial weight wi of the product P and on the amount of material removed from the product P through removal means comprised in the machine 10.

The machine 10 comprises a first acquisition device 1 for acquiring first data d1, corresponding to a measurement of the initial weight wi of the product P entering the machine 10.

The machine 10 further comprises a second acquisition device 2 for acquiring second data d2 corresponding to a measurement of the final weight wf of the product P exiting the machine 10.

That is, the first and second device 1,2 are configured to acquire respectively the first and second data d1,d2 indicative of the initial weight and the final weight wi,wf of each product P.

That is, the first and second device 1,2 can indirectly measure the initial and/or final weight wi,wf of the product P through the acquisition of the first and second data d1,d2.

Alternatively, the first and second device d1,d2 can comprise weighing means 1,2 for acquiring the weight wi,wf of the product P, such as static scales, load cells and dynamometers.

In this case, the first and second device 1,2 can comprise the same weighing means 1,2 or, alternatively, can comprise different weighing means 1,2 in input to and output from the machine 10.

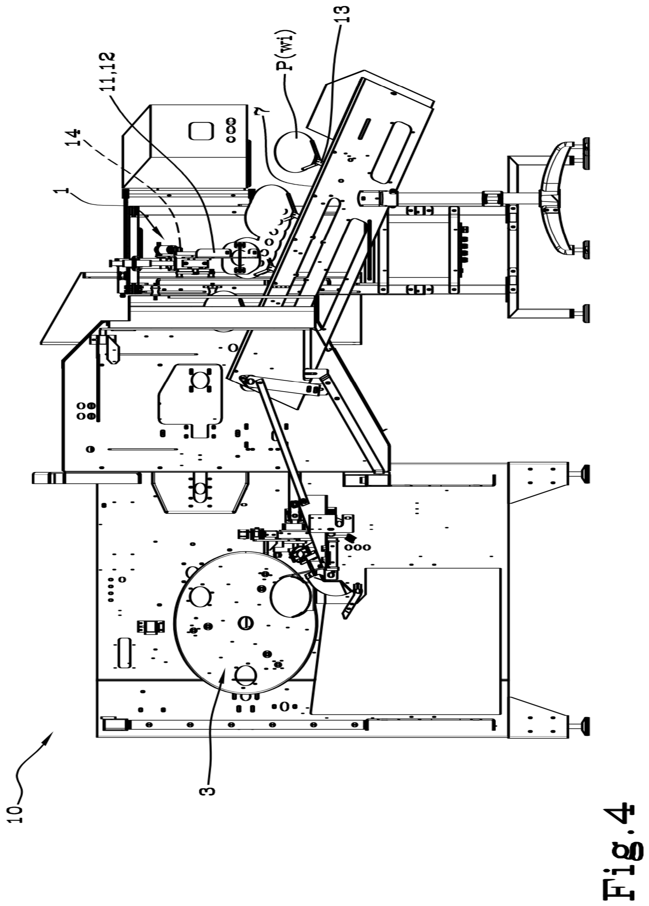

Preferably, but not exclusively, at least one of the first and second device 1,2 has weighing means comprising a load cell 14 operatively connected to a pair of gripper arms 11,12, as illustrated in Figs. 3-5 and Fig. 9. In particular, the arms 11,12 are reciprocally movable towards and away from each other between a pick-up position, in which they pick up the product P resting on a support 13, and a release position, in which they release the product P onto the support 13 from which the product P had been picked up. In the gripping position, the arms 11,12 lift the product P, allowing the measurement of the initial and/or final weight wi,wf of the product P by means of the dynamometer.

Preferably, at least one of the first and second device 1,2 comprises a load cell 21 for acquiring the initial weight wi and/or the final weight wf of the product P (Fig. 10). The load cell 21 comprises or is operatively connected to a rest surface 22, on which the product P is rested in order to acquire the first data d1 or the second data d2, corresponding to the initial weight wi or the final weight wf, respectively.

Even more preferably, the first device 1 comprises the above-described load cell 14 connected to the gripper arms 11,12, while the second device 2 comprises the load cell 21. Alternatively, the second device 2 can comprise a static scale or other weighing means known in the art.

The machine 10 according to the present invention further comprises a removal unit 3 for removing material from the product P. The removal unit 3 comprises removal means 31,32,33 for removing material from the product P, to remove at least one portion of the product P.

The removal means 31,32,33 can be of various types and are in use configured to remove at least one portion of the product P of initial weight wi, obtaining a product P of final weight wf.

Entering a greater level of detail of the operation of the machine 10, the product P is positioned, in use, at the first device 1, to obtain the first data d1 indicative of the initial weight wi. The product P is then moved, automatically and/or manually, at the removal unit 3, in which at least one portion of the product P is removed by one or more of the removal means 31,32,33. Subsequently, the product P is moved, automatically and/or manually, at the second device 2, to obtain the second data d2 indicative of the final weight wf.

In an embodiment of the present invention, the machine 10 can have an infeed line 7 for moving one or more products P entering the machine 10. The machine 10 can have, additionally or alternatively to the infeed line 7, an outfeed line 8 for moving the products P exiting the machine 10.

The infeed line 7 and the outfeed line 8, when present, determine the movement of the products P through the machine 10 according to a transport direction.

The products P are preferably moved by the infeed line 7 so as to be fed to the machine 10 one at a time. For example, the products P can be arranged or positioned in succession on a roller conveyor or a conveyor belt to be fed one at a time to the machine 10. Alternatively, several products P can be simultaneously moved in input to the machine 10.

Similarly, the outfeed line 8 can be configured to evacuate one product at a time from the machine 10. Alternatively, the outfeed line 8 can be configured to move a plurality of products P in output, for example, after having been collected in special containers, boxes or packages.

Each product P is then transported from the infeed line 7 entering the machine 10, where it is placed at the first device 1 for acquiring the first data d1 corresponding to the initial weight wi. Then, the product P is moved towards the removal unit 3, in which the removal means 31,32,33 remove an amount of product P, according to one or more methods and techniques of the type known in the art.

While the product P is subjected to the removal of material by the removal unit 3, a subsequent product P, i.e. a product P subsequently transported by the infeed line 7, can be moved and positioned at the first device 1, to acquire the first data d1 related to that subsequent product P.

The product P, exiting the removal unit 3, is moved in the transport direction up to the second device 2, at which the second data d2 is detected, corresponding to the final weight of the product P.

At the same time, the subsequent product P can be transported at the removal unit 3 for the removal of material by the removal means 31,32,33. Furthermore, a further product P can be transported from the infeed line 7 entering the machine 10 and at the first device 1.

That is, in the embodiment just described, while the second device 2 acquires the second data d2 related to the product P, the removal unit 3 can implement the removal of material from the subsequent product P and the first device 1 can acquire the first data d1 related to the further product P.

Finally, the outfeed line 8 determines the movement of the product P exiting the machine 10.

Advantageously, the machine 10 according to the present invention allows to acquire the first and second data d1,d2 corresponding to the initial and final weight wi,wf of the product, without entailing interruptions of the production line and, in particular, of the removal operations of material from the product P.

That is, the direct or indirect acquisition of the initial weight wi and final weight wf of the product P takes place efficiently, without entailing delays in the production line and optimising the production process.

Furthermore, the machine 10 advantageously allows to acquire the weight of each product P, exploiting the time necessary for the completion of the material removal operations, overcoming the limits of the quality controls of the prior art carried out on batches of products.

The machine 10 according to the present invention further comprises a control unit 4 communicating with the first and second acquisition device 1,2. In particular, the control unit 4 is configured to receive the first and second data d1,d2 and process said first and second data d1,d2 (Fig.2).

In particular, the control unit 4 is configured to obtain a data D of the difference starting from the first and second data d1,d2.

The data D of the difference is preferably obtained by comparing the first data d1 with the second data d2, obtained for the same product P.

The comparison between the first data d1 and the second data d2 can be carried out in different ways, applying, for example, one or more mathematical operators.

According to a first, preferred, but not exclusive mode, the data D of the difference is expressed in terms of percentage yield R. The percentage yield R expresses and is indicative of the amount of product P obtained exiting from the removal unit 3, with respect to the amount of product P entering the removal unit 3. For example, the percentage yield R can be obtained from the ratio between the final weight wf of the product P and the initial weight wi of the product P.

Alternatively or in addition, the data D of the difference can be obtained as a simple difference d, that is, by subtracting the final weight wf of the product P from the initial weight wi of the same product P.

Still alternatively, the data D of the difference can be processed in terms of weighted average M between the percentage yields R calculated on several products P processed by the removal unit 3; for example, it is possible to calculate the weighted average of the percentage yields R of the products P belonging to a batch, obtaining the percentage yield R of the removal unit 3 with respect to a given batch.

Other calculation methods indicative of the difference between initial weight wi and final weight wf or of the amount of material removed from the product P through the removal unit 3 are not excluded by the present invention.

The data D of the difference, calculated in the various modes and preferably expressed in terms of the percentage yield R, allows to acquire information on the amount of material removed from the product P and, consequently, to monitor the operation and optimise the yield of the machine 10 on the basis of the amount of material removed for each product P. The methods with which the monitoring and optimisation are implemented will be detailed in the following.

Advantageously, the control unit 4 operatively connected to the first and second device 1,2 and to the removal unit 3 allows to obtain the data D of the difference for each product P, without interrupting the production process and, in particular, without interrupting the material removal operations by the removal unit 3.

Therefore, the processing unit 4 allows to acquire the first data d1, the second data d2 and the data D of the difference in real time.

As will be evident in the following, the data D of the difference can be used to monitor the operation of the machine 10 itself and, in particular, of the removal unit 3.

In particular, as will be evident below, the data D of the difference, preferably expressed in terms of percentage yield R, can be advantageously used to make evaluations on the operation of the machine 10. The data D of the difference can be used, for example, to optimise the yield of the machine 10 and, in particular, to optimise the material removal step implemented by the removal unit 3 on the product P, in order to remove the correct amount of material from the product P.

The machine 10 according to the present invention can comprise a terminal 5 accessible to an operator and operatively connected to the control unit 4. The control unit 4, in detail, can be further configured to transmit the first data d1 and the final data d2 and/or the initial weight wi and the final weight wf and/or the data D of the difference to the terminal 5 accessible to the operator.

The terminal 5 can be of various types and can comprise a monitor or a display for displaying the data d1,d2,D and/or the weights wi,wf acquired and transmitted. The operator can then display the data d1,d2,D and/or the weights wi,wf acquired, so as to monitor the operation of the machine 10 and, in particular, of the removal unit 3.

In an embodiment, the terminal 5 can comprise a push-button panel or can have a use interface, through which the operator can select one or more operating commands, which are transmitted to the machine 10 and/or to the removal unit 3. The operating commands can be of various types and can be dependent on the data d1,d2,D and/or the weights wi,wf acquired.

Finally, the machine 10 according to the present invention can comprise an internal, external or remote memory 6, configured for storing the first data d1, the second data d2 and/or the data D of the difference. The data d1,d2,D related to several products P processed by the machine 10 can be advantageously stored for a predefined time, creating a database for subsequent processing on the basis of the extraction of these data.

Furthermore, the control unit 4 can be configured to send the data d1,d2 and/or D to production management software. In particular, the control unit 4 can be configured to send in real time or at preset time intervals the data d1,d2 and/or D related to one or more products P belonging to a batch of products P or to several batches of products P, processed by the machine 10 and, in particular, processed by the removal unit 3.

Thanks to the transmission of data d1,d2,D to the production management software, an operator, by entering an identification reference of a batch of interest, can detect the performance recorded for each production batch.

Returning to structural aspects, within the machine 10 according to the present invention, the removal unit 3 preferably, but not exclusively, comprises peeling means 31 configured to carry out an operation of removing the peel from a food product P, preferably from a fruit P.

Therefore, in the preferred embodiment, the machine 10 is a machine 10 for the controlled peeling of fruit P or other vegetables.

The peeling means 31 can be of various types and can operate by cutting or abrasion or milling the peel, to obtain a partial or total removal of the peel from the fruit P, depending on the processing needs.

Therefore, the removed peel has a variable weight depending on the type of fruit P, determining a difference between initial weight wi and final weight wf, variable depending on the type of fruit P.

Furthermore, the thickness and amount of peel to be removed from the fruit P can be calibrated or predetermined depending on the fruit P: a fruit P with a thicker peel requires a greater removal of material, resulting in a greater difference between the initial weight wi and the final weight wf of the fruit P. Conversely, a fruit P with a thinner peel requires a smaller removal of material, resulting in a smaller difference between the initial weight wi and the final weight wf.

Depending on the type of fruit P, it is possible to establish an optimal amount of material to be removed, in particular, an optimal amount of peel to be removed from the fruit P.

The optimal amount of peel to be removed, different and predetermined for each type of fruit P, allows to obtain a correctly peeled fruit capable of externally exposing its pulp; at the same time, the optimal amount of peel to be removed allows to avoid the excessive removal of pulp together with the peel. In fact, it is desirable to remove the peel from the product P which entails the least possible removal of the pulp.

In fact, removing a considerable amount of pulp together with the peel involves a loss of edible material, causing a loss in economic terms in those who use the machine, for example a supplier of peeled fruit.

The optimal amount of peel to be removed can be expressed in terms of the percentage yield R, as expressed in the previous paragraphs.

With reference to Fig. 6-Fig. 8, the peeling means 31 can comprise a cutting blade 311 movable along a peeling trajectory t1,t2, to remove the peel of the fruit P.

The cutting blade 311 is preferably a bell blade, sliding along a guide to travel the peeling trajectory. In use, the cutting blade 311 is in an inclined configuration or, in other words, transverse with respect to the outer surface of the fruit, with an inclination with respect to the surface depending on the amount of material to be removed or the type and three-dimensional shape of the fruit P.

The cutting blade 311 is shaped to come into contact with the outer surface of the fruit and to remove the peel, without affecting the pulp or the innermost portion of the fruit, the integrity of which must be maintained. The peeling trajectory t1,t2 can have various developments, depending on the shape of the fruit to be peeled.

For example, the cutting blade 311 can draw a substantially straight peeling trajectory t1 or a curvilinear peeling trajectory t2. Different peeling trajectories are not excluded.

The use of different peeling means 31 is also not excluded, comprising for example means for removing the peel by abrasion of the outer surface of the fruit.

The peeling means 31 further comprises a rotation shaft 312, having rotation axis X. The rotation shaft 312 is in use operatively connected to the fruit P. In detail, the rotation shaft 312 is operatively connected to the fruit P by means of at least one, preferably two spindles 313 placed at the rotation shaft 312. During the peeling step, the spindles 313 transmit the rotation from the rotation shaft 312 to the fruit P, keeping it simultaneously clamped and in position during the peeling step.

Preferably, the fruit P is positioned at the spindles 313 by means of conveyors, configured to withdraw the fruit P from the infeed line 7 and to position it between the spindles 313, to allow the peeling of the fruit P.

In detail (Fig. 3-Fig. 5), the fruit P is first moved by the infeed line 7 at the first device 1. Preferably, the first device 1 comprises the gripper arms 11,12, operatively connected to the load cell 14 for the acquisition of the first data d1 and, in particular, for the measurement of the initial weight wi of the fruit P.

Then, the fruit P is moved in the transport direction towards the removal unit 3. The conveyors pick up the fruit P from the infeed line 7 and place it at the spindles 313, which are clamped to allow the fruit to be gripped and to transmit the rotation of the rotation shaft 312 (Fig. 6-Fig. 7).

Preferably, after being picked up by the conveyors and before being placed at the spindles 313, the fruit P undergoes a rotation by an angle in a counter-clockwise direction, to allow correct positioning. Preferably, the rotation angle is equal to 120°.

Inside the removal unit 3 the fruit is operatively connected to the shaft 312 by means of the spindles 313 and is in use rotated, to allow the peeling of the fruit P through the cutting blade 311.

Once activated in rotation, the shaft 312 determines the rotation of the fruit around the X axis. At the same time, the cutting blade 311 travels the peeling trajectory t1,t2 straight or at least partially curvilinear, removing the peel of the fruit P.

In a further preferred mode, the fruit P, after removal of the peel, can be further rotated by an angle, preferably equal to 120° counter-clockwise, to correctly expose the heads of the fruit P to a head cutting device 34.

The term heads refers to the head and bottom portions of the fruit P, at which the spindles 313 are conveniently coupled.

The head cutting device 34 comprises blades 341 configured for performing the cutting of the heads of the fruit P. By cutting the heads, the fruit P is freed from the spindles and is removed from the removal unit 3. In particular, when the heads are cut, the fruit P is free from the spindles 313 and falls on the second device 2, preferably comprising the load cell 21 and the rest surface 22 on which the fruit is positioned to allow it to be weighed.

Other modes of transport of the fruit P from the removal unit 3 to the second device 2, automatic, semi-automatic or manual, are not excluded. At the second device 2, the second data d2 is acquired, i.e. the measurement of the final weight wf.

Finally, the fruit P is moved out of the machine 10, through the outfeed line 8.

In detail, while a first fruit P is subjected to the acquisition of the final weight wf by the second device 2, a second fruit P can be subjected to the peeling operation by the peeling means 31 and a third fruit can be positioned at the first device 1 for the measurement of the relative initial weight wi.

Finally, the outfeed line 8 determines the movement of the first fruit P exiting the machine 10 and the movement of the second and third fruit P in the transport direction towards the unit or the subsequently placed device. The initial weight wi and the final weight wf for each fruit P, are transmitted to the control unit 4, configured to operate a processing of said initial weight and final weight wi,wf, to obtain the data D of the difference.

As anticipated, the data D of the difference can be processed in various ways by the control unit 4.

According to a first, preferred but not exclusive operating mode, the control unit 4 is configured to derive the percentage yield R from the first and second data d1,d2 corresponding to the initial weight wi and the final weight wf of the product P, respectively.

According to a further or alternative operating mode, the control unit 4 is configured to subtract the final weight wf of the fruit P from the initial weight wi of the fruit P, to obtain the difference d in weight of the fruit P subjected to material removal, in particular the peel.

According to a further operating mode, the data of the difference can be processed as a weighted average M between several percentage yields R or several differences d obtained from several fruits P, preferably belonging to a batch.

Further operating modes for deriving the data D of the difference can be provided for the control unit 4, in addition or as an alternative to the previous ones.

Advantageously, the machine 10 according to the present invention allows to process a plurality of parameters on the basis of the first and second data d1,d2.

In detail, the machine 10 comprising the processing unit 4 allows to obtain an accurate measurement of the data D of the difference and, in particular, of the percentage yield R and/or of the difference d between the initial weight wi and the final weight wf of the fruit P and/or of the weighted average M between several data belonging to several fruits P. The data D of the difference, in whatever form it is obtained, is processed quickly and efficiently, without entailing prolonged interruptions of the production line and, in particular, without entailing prolonged interruptions of the peel removal operations carried out by the removal unit 3.

Further advantageously, the data D of the difference can be used to perform evaluations on the operation of the machine 10 in general and of the removal unit 3 in particular. In fact, the data D of the difference can be used to monitor the operation of the machine 10 and to optimise the material removal step carried out by the removal unit 3, in order to remove the correct amount of peel, from the fruit P, limiting the excessive and unwanted removal of pulp from the fruit P. Advantageously, as will be detailed below, by acquiring and monitoring, among other parameters, the percentage yield R it is possible to optimise the operation of the machine 10 in general and of the removal unit 3 in a quick and intuitive manner for the operator.

The initial weight wi, the final weight wf, the data D of the difference can be transmitted to the terminal 5 accessible to the operator and can be stored in the internal, external or remote memory 6.

Furthermore, the control unit 4 can be configured to send the data d1,d2 and/or D to the production management software. In particular, the control unit 4 can be configured to send in real time or at preset time intervals the data d1,d2 and/or D related to one or more fruits P belonging to a batch of fruits P or to several batches of fruits P, processed by the removal unit 3. An operator, by entering an identification reference of a batch of fruit of interest, can acquire the performance recorded for each batch of fruit.

In an alternative embodiment, the removal unit 3 can comprise, additionally or alternatively to the peeling means 31, a core removal device 32, for removing the core from the fruit P. The core removal device 32 can be of various types known in the field of fruit processing machines.

In the alternative embodiment, the second device 2 can be positioned downstream of the peeling means 31, considering the transport direction, to acquire the final weight wf of the fruit P from which the core has been removed or from which both the peel and the core have been removed.

In a further embodiment, the removal unit 3 can comprise, additionally or alternatively to the peeling means 31 and/or the core removal device 32, a pitting device 33 for removing at least one pit from the fruit P. The pitting device 33 can be of various types known in the field of fruit processing machines.

In the further embodiment, the second device 2 can be placed downstream of the peeling means 31 and/or downstream of the core removal device 32, considering the transport direction, to acquire the final weight wf of the fruit P from which the pit has been removed, or from which the pit has also been removed in addition to the peel and/or the core.

The first and second device 1,2 can be positioned in a very versatile way along the transport direction, to acquire the initial weight wi and the final weight wf upstream and downstream of one or more of the peeling means 31, the core removal device 32 and the pitting device 32. The acquisition of the initial weight wi and the final weight wf of the fruit P takes place quickly and efficiently, without involving interruptions or slowdowns in the production process implemented by the machine 10 and, in particular, by the removal unit 3.

In fact, the machine 10 advantageously allows to acquire the initial weight wi and the final weight wf of each fruit P, exploiting the time necessary to complete the peel removal and/or core removal and/or pit removal operations.

Further means for removing non-edible parts of the fruit P can be comprised in the removal unit 3. For example, means for removing head or bottom portions of the fruit P, also called heads, can be present. For each of the further removal means, the control unit 4 is configured to receive the first and second data d1,d2, similarly to what is stated in the previous paragraphs.

The control unit 4 is further configured to allow monitoring the operation of the machine 10.

In fact, the second object of the present invention is a method for monitoring the operation of a machine 10 for the removal of material from products P.

Finally, the third object of the present invention is a computer program comprising instructions which, when run by the control unit 4, cause the computer to implement the steps of the method detailed below. In other words, the object of the present invention is also a computer program integrated in the control unit 4 and configured to implement the method steps described below.

In fact, by implementing performing the steps of the method which is the object of the present invention, the control unit 4 is able to monitor the operation of the machine 10 based on the first and second data d1,d2 detected or the initial weight wi and the final weight wf measured.

In particular, based on the first and second data d1,d2 detected or the initial weight wi and the final weight wf measured, the control unit 4 is able to allow an optimization of the yield of the removal unit 3.

The method according to the present invention comprises the steps of:
- Acquiring first data d1 corresponding to a measurement of the initial weight wi of a product P entering the machine 10;
- Acquiring second data d2 corresponding to a measurement of the final weight wf of the product P exiting the machine 10, following the removal of material from the product P;
- Carrying out an operation of comparing between the first data d1 and the second data d2 to obtain data D of the difference between the first data d1 and the second data d2.

In the step of *Acquiring a first data d1 corresponding to a measurement of the initial weight wi of a product P entering the machine 10,* the acquisition of the data d1 can take place in various ways, using different instruments, sensors and/or transducers.

In fact, the first data d1 corresponds, directly or indirectly, to the initial weight wi of the product P, transported in input to the machine 10.

Therefore, the first data d1 can be of various types, as long as it can be correlated with the initial weight wi of the product P.

In a variant of the method according to the present invention, the first data d1 is acquired by weighing the product P by means of a first weighing device 1. The weighing can take place through a scale, a load cell, a dynamometer or a transducer of another type.

Preferably, the weighing of the product P takes place by means of a first device 1 comprising gripper arms 11,12 connected to a dynamometer, of the type described in the previous paragraphs.

If the initial weight wi of the product P is derived indirectly from the first data d1, the method according to the present invention provides for the further step of:
- Transducing the first data d1 to obtain the initial weight wi of the product P.

Similarly, in the step of *Acquiring a second data d2 corresponding to a measurement of the final weight wf of the product P exiting the machine 10, following the removal of material from the product P,* the acquisition of the second data d2 can take place in various ways, using different instruments, sensors and/or transducers.

The second data d2 corresponds, directly or indirectly, to the final weight wf of the product P, transported in output from the machine 10.

Therefore, the second data d2 can be of various types, as long as it can be correlated with the final weight wf of the product P from which an amount of material has been removed.

In a variant of the method according to the present invention, the second data d2 is acquired by weighing the product P by means of a second weighing device 2. The weighing can take place through a scale, a load cell, a dynamometer or a transducer of another type.

It is not excluded that the first and second data d1,d2 or the initial and final weight wi,wf are acquired by the same device 1,2, at which the product P is moved respectively before the removal of material and after the removal of material from the product P.

If the final weight wf of the product P is derived indirectly from the second data d2, the method according to the present invention provides for the further step of:
- Transducing the second data d2 to obtain the final weight wf of the product P.

As regards the step of *Carrying out an operation of comparing between the first data d1 and the second data d2 to obtain a data D of the difference between the first data d1 and the second data d2,* the data D of the difference can be obtained in different ways. In particular, the data D of the difference corresponds to a difference D in weight between the initial weight wi acquired, directly or directly, for the product P in input, and the final weight wf acquired, directly or indirectly, for the product P exiting the machine 10.

Preferably, the data D of the difference is obtained as a percentage yield R, indicative of the amount of product P obtained in output from the removal unit 3, with respect to the amount of product P entering the removal unit 3. For example, the percentage yield R is obtained by means of the ratio between the final weight wf of the product P and the initial weight wi of the product P.

Alternatively or additionally, the data D of the difference can be obtained by subtracting the final weight wf of the product P from the initial weight wi of the product P, obtaining the difference d.

Alternatively or additionally to each of the above, the data D of the difference can be obtained as a weighted average M between several percentage yields R or differences d processed for several products P, preferably belonging to a production batch.

Therefore, the data D of the difference is representative of the amount of material removed from the product P by the machine 10. In particular, the data D of the difference is representative of the weight of said material removed from the product P.

In a variant, the method according to the present invention comprises the further step of:
- Emitting a signal indicative of the data D of the difference,
   after the step of *Carrying out an operation of comparing between the first data d1 and the second data d2 to obtain data D of the difference between the first data d1 and the second data d2.*

The indicative signal can be of various types. It can be a visual, numerical, acoustic or another signal that can be deduced by the person skilled in the art.

Advantageously, therefore, by deriving the data D of the difference from the first and second data d1,d2 it is possible to have a clear indication of the amount of material removed for each product P by a machine 10 for material removal.

Advantageously, the data D of the difference can be used to monitor the operation of the machine 10, on the basis of the amount of material removed for each product P.

Advantageously, in fact, the data D of the difference obtained can be used for subsequent processing by a data processing unit, can be made available to an operator through a terminal and/or can be stored in a memory 6.

In fact, the machine 10 is configured to efficiently remove an amount of material from the product P, to which amount a weight is attributable, measured by difference between the initial weight wi and the final weight wf.

During normal and optimal operation, the machine 10 is configured to remove a predetermined amount of material, within a preset tolerance and variable according to the type of product, the processing carried out and the calibration of the instrumentation used. Said tolerance corresponds to an expected interval I and is preferably preset for a type of product P.

In fact, when the data D of the difference is below the expected interval I, the amount of material removed from the product P is not sufficient, with respect to an expected amount; conversely, when the data D of the difference is above the expected interval I, the amount of material removed from the product P is excessive, with respect to the expected amount.

In fact, data D of the difference not comprised in the expected interval I may be indicative of a non-optimal operation of the machine 10. In particular, considering the machine 10 comprising a removal unit 3 comprising removal means, said data D of the difference not comprised in the expected interval I may be indicative of an unexpected operation of the machine 10 and, in particular, of the removal unit 3.

For example, but not exclusively, data D of the difference not comprised in the expected interval I may indicate an improvable operation of the removal unit 3: for example, data D of the difference outside the expected interval I may indicate an improvable percentage yield R.

Furthermore, data D of the difference not comprised in the expected interval I may be indicative of a non-optimal operation of the removal unit 3; for example, but not exclusively, the non-optimal operation may be dependent on a loss of abrasive or cutting power of the removal means or on an incorrect positioning of the product P with respect to the cutting blade 311.

Consequently, the data D of the difference can be used not only to monitor the operation of the machine 10, but also to perform operations for acquiring the yield of the removal unit 3 in order to optimise the operation thereof. Furthermore, the data D of the difference can be used to perform recognition operations of non-optimal operation and diagnostics on the machine 10 and on the removal unit 3.

The expected interval I can be fixed and preset at the beginning of a production cycle.

Alternatively, the expected interval I can be preset for a type of product P or for a production batch of products P: in this case, the machine 10 can comprise a product identification system P communicating with the control unit 4, in order to transmit the type of product P or production batch and to set the respective and correct expected interval I. The identification of the product P can also be carried out manually by an operator.

That is, the identification system is in communication with the control unit 4 and is configured to transmit to the control unit 4 information of the product P relating to the type of product P identified and/or the batch to which the product P belongs.

The control unit 4 is configured for setting or changing the expected interval I on the basis of the identified product P information.

In fact, as described in the previous paragraphs, different types of P products or production batches P may require different expected intervals. Furthermore, the control unit 4 can be configured to send yield optimisation operating commands, when the data D of the difference acquired is not comprised in the expected interval I set on the basis of the product information P. The term "yield optimisation operating commands" means a plurality of commands aimed at bringing the given difference within the expected interval I, in order to optimise the yield of the machine 10 and, in particular, of the removal unit 3.

Additionally or alternatively, the expected interval I can be preset and modified depending on the type of customer for which the processed product is intended: for customers who require greater product removal, an expected interval I different from that selected for customers who require a rougher final product and with less product removal is preset.

The method according to the present invention can also provide the further step of:
- Emitting a signal of expected operation SA of the machine 10 when the data D of the difference between the first data d1 and the second data d2 is within a pre-established expected interval.

Alternatively or in addition, the method can comprise the step of:
- Emitting a signal of non-expected operation SNA of the machine 10 when the data D of the difference between the first data d1 and the second data d2 is outside a pre-established expected interval I.

In fact, the control unit 4 can be further configured for operating a comparison between the data D of the difference and the expected interval I and for emitting the expected operating signal SA when the data D of the difference falls within the preset optimal interval I.

In addition, or alternatively, the control unit 4 can be configured to emit a non-expected operation signal SNA when the data D of the difference does not fall within the predetermined expected interval I.

Preferably, the control unit 4 is configured to emit only the non-expected operation signal SNA, in order to signal a yield of the removal unit 3 that can be improved and/or anomalies and conditions of non-optimal operation of the machine 10, corresponding to unexpected or incorrect removals of material from the product P.

Th present method can further provide the step of:
- *Transmitting the signal of expected operation SA and*/*or the signal of non-expected operation SNA to a terminal 5 accessible by an operator.*

The terminal 5, operatively connected to the control unit 4, therefore allows to display the information transmitted by the control unit 4 related to the data D of the difference and transmitted as an expected operation signal SA if the difference D falls within the expected interval I, or as a non-unexpected operation signal, if the difference D falls outside the expected interval I.

The control unit 4 can also transmit the first and second data d1,d2 and/or the initial and final weight wi,wf, making available and visible to the operator the individual data related to each product P and/or several data related to a plurality of products P.

The operator, on the basis of what is consulted on the terminal 5, is advantageously able to monitor the operation of the machine 10. That is, thanks to the data D of the difference transmitted to the terminal 5 in the form of the expected signal SA and the non-expected signal SNA, the operator has the possibility of supervising the operation of the machine 10 and of promptly intervening in the event of non-expected operation, implementing the adjustments necessary to improve the performance of the removal unit 3 and, possibly, remedying or promptly reporting conditions of non-optimal operation.

Furthermore, it is possible to have a record of the data collected, since the control unit 4 can also be configured for:
- *Storing the first data d1, the second data d2 and*/*or the data D of the difference in an internal memory 6 of the machine 10, or an external or remote one,*
which represents a further step of the method according to the present invention, in a possible variant.

The data d1,d2,D can be stored together with respective information such as the type of product P or their production to which the product P belongs.

Finally, the method according to the present invention, on the basis of the data D of the difference processed by the control unit 4, can further comprise the step of:
- *Sending one or more corrective operating commands to the machine 10, to bring the data D of the difference back within the expected interval I,*
after the step of *Emitting a signal of non-expected operation SNA when the data D of the difference between the first data d1 and the second data d2 is outside a pre-established expected interval I.*

The corrective commands can be transmitted to various components of the machine 10, in particular to the removal unit 3, firstly in order to improve and optimise the yield of the removal unit 3. For example, and in a preferred manner, the corrective commands can be sent to the removal unit 3 in order to improve the percentage yield R.

Further corrective commands can be sent to the removal unit 3 or its components, in order to remedy any non-optimal operations of the removal unit 3 itself.

The corrective commands can be sent automatically by the control unit 4 to the machine 10 or its components or can be transmitted to the machine 10 by hand or at the command of the operator.

In conclusion, considering a machine 10 for the removal of material from a food product P and, in particular, for the removal of peel, core, pit and/or other non-edible parts from fruit P, the method according to the present invention advantageously allows to monitor said removal operation of the peel, core, pit and/or other non-edible parts for each fruit P entering the machine 10, on the basis of the initial weight wi of the fruit P and on the basis of the final weight wf of the peeled fruit P.

We specify that the term "other non-edible parts" can be understood, among others, as leaves and/or head and bottom portions of the fruit and/or further non-edible parts, depending on the type of fruit P.

Advantageously, the data D of the difference can be used to monitor the operation of the machine 10, based on the amount of peel removed for each fruit P.

Based on the data D of the difference, it is possible to plan intervention, maintenance and repair operations of the machine 10 and, in particular, of the removal unit 3.

Based on the data D, in particular based on the percentage yield R, it is possible to plan operations aimed at optimising the yield of the removal unit 3.

Considering a preset expected interval I, a value of the data D of the difference below the expected interval I may indicate that an insufficient amount of peel is removed from the fruit P or a first type of non-expected operation; conversely, a value of the data D of the difference above the expected interval I may indicate that not only the peel, but a portion of pulp has been further removed from the fruit P or a second type of non-expected operation. These types of non-expected operations can refer to an improved yield of the removal unit or to conditions of non-optimal operation, for example, of the removal unit 3; in particular, said non-expected operations can refer to a positioning of the peeling means 31 which can be improved, to a different applicable pressure on the fruit P during the peeling operations or to both of the previous causes.

Furthermore, said non-expected operations can refer to non-optimal operations of the peeling means 31 and, in particular, of the cutting blade 312, when present. For example, the cutting blade 312 can be moved along a peeling trajectory t1,t2 which is not optimal for a type of fruit P or, otherwise, the cutting blade can be poorly sharpened after a number of uses.

The method according to the present invention allows to monitor the operation of the machine 10, to detect in real time any unexpected operations and to intervene promptly, for example, by programming a different and more suitable peeling trajectory or by replacing or re-sharpening the blade of the peeling means 31.

In the embodiment of the machine 10 comprising the removal unit 3 having the core removal device 32 and the pitting device 33, the method according to the present invention advantageously allows to monitor the operation of one or more of the aforesaid means or devices 32,33, similarly to what is stated in the previous paragraphs. Therefore, the method also allows to optimise the yield of the core removal device 32 and the pitting device 33, where present.

Where the removal unit 3 comprises other cutting means, for example for removing the heads of the fruit P, the method could intuitively also be applied to the latter.

In conclusion, in a greatly advantageous manner, the machine 10 according to the present invention, thanks to the presence of the control unit 4 implementing the method detailed above, allows to overcome the limits of the prior art. In fact, the machine 10 is able to monitor the operation of the removal unit 3 quickly, efficiently and accurately, receiving the first and second data d1,d2 for each product P, and without interrupting the production line.

## Claims

1. A method for monitoring the operation of a machine (10) for an optimised removal of material from products (P), comprising the steps of:
Acquiring first data (d1) corresponding to a measurement of the initial weight (wi) of a product (P) entering the machine (10);
Acquiring second data (d2) corresponding to a measurement of the final weight (wf) of the product (P) exiting the machine (10), following the removal of material from the product (P);
Carrying out an operation of comparing between the first data (d1) and the second data (d2) to obtain data (D) of the difference between the first data (d1) and the second data (d2).

2. The method according to claim 1, comprising the step of
Emitting a signal indicative of the data (D) of the difference,
After the step of *Carrying out an operation of comparing between the first data (d1) and the second data (d2) to obtain data (D) of the difference between the first data (d1) and the second data (d2).*

3. The method according to claim 1 or 2 comprising the step of:
Emitting a signal of expected operation (SA) of the machine (10) when the data (D) of the difference between the first data (d1) and the second data (d2) is within a pre-established expected interval (I); and/or
Emitting a signal of non-expected operation (SNA) of the machine (10) when the data (D) of the difference between the first data (d1) and the second data (d2) is outside a pre-established expected interval (I).

4. The method according to claim 1, wherein the step of *Carrying out an operation of comparing between the first data (d1) and the second data (d2) to obtain data (D) of the difference between the first data (d1) and the second data (d2)* is achieved as the ratio between the final weight (wf) of the product (P), exiting the machine (10), and the initial weight (wi) of the product (P), entering the machine (10), so as to obtain the percentage yield (R).

5. The method according to claim 1 or 4 wherein the step of *Carrying out an operation of comparing between the first data (d1) and the second data (d2) to obtain data (D) of the difference between the first data (d1) and the second data (d2)* is achieved by subtracting the final weight (wf) of the product (P), exiting the machine (10), from the initial weight (wi) of the product (P), entering the machine (10), so as to obtain the data (D) of the difference.

6. The method according to at least one of claims 3 to 5 comprising the step of:
*Sending one or more corrective operating commands to the machine (10), to bring the data (D) of the difference back within the expected interval (I),* after the step of *Emitting a signal of non-expected operation (SNA) when the data (D) of the difference between the first data (d1) and the second data (d2) is outside a pre-established expected interval (I).*

7. The method according to at least one of the preceding claims, comprising the step of
*Storing the first data (d1), the second data (d2) and*/*or the data (D) of the difference in an internal memory (6) of the machine (10), or an external or remote one.*

8. The method according to at least one of claims 3 to 7, comprising the step of
*Transmitting the signal of expected operation (SA) and*/*or the signal of non-expected operation (SNA) to a terminal (5) accessible by an operator.*

9. A computer program comprising instructions which, when the program is run by a computer comprising a control unit (4), ensure that the computer implements the steps of the method according to at least one of claims 1-8.

10. A machine (10) for the optimised removal of material from a product (P), comprising:
a first acquisition device (1) for acquiring first data (d1) corresponding to a measurement of the initial weight (wi) of a product (P) entering the machine (10);
a second acquisition device (2) for acquiring second data (d2) corresponding to a measurement of the final weight (wf) of the product (P) exiting the machine (10);
a material removal unit (3) having removal means (31,32,33) for removing material from the product (P) so as to remove at least a portion of the product (P) of an initial weight (wi), thereby obtaining a product (P) of a final weight (wf);
a control unit (4) communicating with the first and second acquisition devices (1,2) in order to implement the method according to one or more of claims 1-8.

11. The machine according to claim 10, wherein the weighing means (1,2) comprise a dynamometer operatively connected to a pair of gripper arms (11,12),
wherein the arms (11,12) are reciprocally movable, towards and away from each other, between a pick-up position, in which they pick up the product (P) resting on a support (13), and a release position, in which they release the product (P) onto the support (13); and
wherein in the pick-up position the arms (11,12) lift the product (P) to allow the measurement of the weight (wi,wf) of said product (P).

12. The machine according to claim 10, wherein the removal means (31,32,33) for removing material from the product (P) work by cutting, scraping, abrasion, milling and/or removal of the scrap.

13. The machine according to one or more of claims 10 to 12, wherein the removal unit (3) comprises a peeling means (31) configured to carry out an operation of removing the peel from a food product (P), preferably a fruit (P).

14. The machine according to claim 13 wherein the peeling means (31) comprises a cutting blade (311) and a rotation shaft (312) having a rotation axis (X),
wherein the rotation shaft (312), during use, is operatively connected to the fruit (P), causing the rotation thereof about the axis (X); and
wherein the cutting blade (311), during use, is movable at least along a peeling trajectory (t1,t2) so as to achieve the removal of the peel from the fruit (P).

15. The machine according to claim 10 or 13, wherein the removal unit (3) comprises a coring device (32) for removing the core from the fruit (P); and/or a pitting device (33) for removing at least a pit from the fruit (P).

16. The machine according to one or more of claims 10-15, comprising a terminal (5) accessible to an operator and wherein the control unit (4) is operatively connected to the terminal (5) in order to transmit the data (D) of the difference, the signal of expected operation (SA) and/or the signal of non-expected operation (SNA) processed by the control unit (4) on the basis of the first data (d1) and second data (d2).

17. The machine according to any one of claims 10-16, comprising an identification system for identifying a type of product (P) belonging to a production lot,
wherein the identification system is in communication with the control unit (4) and is configured to transmit to the control unit (4) product information relating to the type of product (P) identified;
and wherein the control unit (4) is configured to set the expected interval (I) on the basis of the information relating to the identified product (P).

18. The machine according to claim 17, wherein the control unit (4) is further configured to send operating commands to optimise the performance of the machine (10), when the data (D) of the difference is not within the expected interval (I) preset on the basis of the information relating to the product (P).
